# EUROPEAN PATENT SPECIFICATION

(11) **EP 2 013 117 B1**
(45) Date of publication and mention of the grant of the patent: **11.01.2012**
(21) Application number: 06745314.2
(22) Date of filing: 02.05.2006
(51) Int. Cl.: B65G 1/137

(54) **APPARATUS FOR STORING AND PICKING UP ARTICLES WITH DIFFERENT DIMENSIONS AND WEIGHT, PARTICULARLY BOOKS**
VORRICHTUNG ZUM LAGERN UND AUFNEHMEN VON GEGENSTÄNDEN MIT VERSCHIEDENEN ABMESSUNGEN UND UNTERSCHIEDLICHEM GEWICHT, INSBESONDERE BÜCHERN
APPAREIL PERMETTANT DE STOCKER ET DE PRENDRE DES ARTICLES DE DIMENSIONS ET DE POIDS DIFFERENTS, EN PARTICULIER DES LIVRES

(43) Date of publication of application: 14.01.2009
(73) Proprietor: Habitat Italiana S.R.L., 25135 Brescia (IT)
(72) Inventor: CUPOLO, Guido, I-25135 Brescia (IT)
(74) Representative: Pulieri, Gianluca Antonio
(86) International application number: PCT/IT2006/000301
(87) International publication number: WO 2007/125554

(56) References cited:
- EP-A2- 0 562 573
- DE-C1- 4 027 874
- FR-A1- 2 667 183
- JP-A- 7 179 207
- US-A1- 2005 010 499
- US-A1- 2005 149 226

## Description

The object of the present invention is an apparatus suitable for storing and picking up articles with different dimensions and weight. In particular, the object of the present invention is an apparatus for storing and picking up books, volumes, documents, files, dossiers and the like.

Books are traditionally archived on shelves that occupy wide spaces into the rooms intended for this purpose. It is known that especially when the number of archived books is very high, such shelves occupy very large spaces, often subtracting resources to the owner authorities. Such resources on the other hand may be advantageously used for other purposes. Alternatively, books are stored with apparatus as dislosed in EP 0 562 573. EP0562573 discloses an apparatus according to the preamble of claim 1.

The object of the present invention is to provide an apparatus for storing and then picking up books which should allow such storage in a restricted space.

Such object is achieved by an apparatus obtained according to claim 1. The dependent claims thereof describe embodiment variants.

A further object of the present invention isto reduce the costs for the management of archives through the use of fully automated information and mechanical technologies suitable for identifying, tracing, storing, handling, picking up, making an inventory of the assets stored in the archives.

A further object of the present invention is to manage the documents in compliance with the privacy regulations by the use of information and mechanical technologies that control, regulate, record access to the documents stored.

A further object of the present invention is to allow the archive usability to disabled persons.

The features and advantages of the apparatus according to the present invention will appear more clearly from the following description, made by way of an indicative and non-limiting example with reference to the annexed figures, wherein:

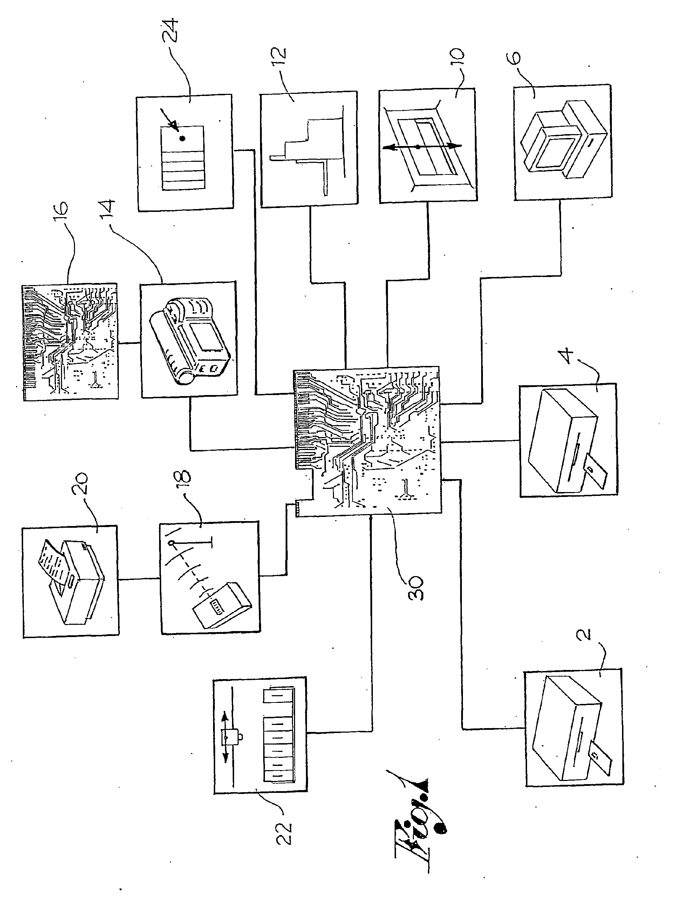

- figure 1 shows a diagram of the apparatus according to the present invention;

- figure 2 shows a book coupled to a label for recognition.

The present invention relates to an apparatus for storing and picking up articles, for example books, suitable for allowing a user to store and pick up articles having physical parameters, such as dimensions and weight, differing from one article to the other.

The description below especially refers to the storage and picking up of books, but it is clear that the invention can be used for storing and picking up also other articles.

The apparatus comprises a use station suitable for cooperating with the user for storing and picking up the book.

According to an embodiment not part of the present invention, said apparatus comprises acquisition means 2 suitable for acquiring user identification information stored on information media, such as a magnetic card or a smart card.

Advantageously, said acquisition means are arranged in the proximity of the use station.

Moreover, according to an embodiment not part of the present invention, said apparatus comprises information transcription means 4 suitable for transcribing information on said information media.

Preferably, said transcription means are arranged in the proximity of the use station, that is, in such position as to be accessible by the user that cooperates with the use station.

Said user identification information comprises information relating to the user's identity, information relating to the access levels allowed to said user, information relating to the books picked up in the past, information relating to delays in the return of said books and the like.

According to an embodiment not part of the present invention, said apparatus comprises display means 6, preferably arranged in the proximity of the use station, suitable for displaying the options available to the user for the selection of the books to pick up.

Moreover, the apparatus comprises a plurality of loading units, each of said loading units being suitable for seating at least one of said articles in a predetermined position.

Preferably, said loading unit comprises a tray suitable for seating a plurality of articles. Preferably, said tray comprises a bottom and side walls sufficiently high to allow the positioning of the articles, for example the books, without their falling out of the tray while they are carried.

According to a preferred embodiment, said loading unit is inclinable, so as to allow access to disabled persons, for example next to said loading unit and seating on a chair for disabled persons.

According to a preferred embodiment, said use station comprises a seating zone suitable for seating said loading unit so that is accessible to the user.

Preferably, said apparatus comprises closing means 10, suitable for preventing the user's access to said seating zone of the loading unit. For example, said closing means 10 comprise a port suitable for raising or lowering for allowing or preventing access to said seating zone, respectively.

Moreover, said apparatus comprises support means suitable for seating said plurality of loading units.

According to an embodiment not part of the present invention, said support means comprise a plurality of frames, for example shaped as shelves, for seating said loading units, arranging them vertically spaced one on top of the other and/or arranging them horizontally one next to the other for using the available volume of the room.

Preferably, said loading units are arranged stacked so as to be vertically spaced in a different manner, based on the dimensions of the articles contained therein.

According to an embodiment not part of the present invention, said apparatus comprises handling means suitable for handling said loading units, for example comprising at least one vertical sliding rack or a rope system.

Moreover, said apparatus comprises archiving means 12 of the loading units suitable for cooperating with said support means for seating said units therein. Moreover, said archiving means are suitable for picking up said units from said support means and for carrying them to said use station for the delivery to the user.

According to the present invention, said archiving means comprise a self-propelled carriage, for example on tracks, comprising a pick up device and a moving base.

Said pick up device is suitable for positioning at different heights for reaching a predetermined loading unit archived at a predetermined height, cooperating therewith and extracting it from the support means.

Said moving base is suitable for moving for carrying said loading unit engaged with said pick up device from the storing means to the use station and vice versa.

According to the present invention, said carriage comprises a collecting zoned suitable for seating at least a further loading unit, for archiving said loading units according to logic of optimisation of the routes covered by said carriage.

Moreover, the apparatus comprises detecting means 14 suitable for detecting said physical parameters of the book.

Preferably, said detecting means are arranged at said use station, in a position accessible by said user.

According to an embodiment not part of the present invention, said detecting means comprise a scale suitable for detecting the weight of the article to be stored.

According to a further embodiment, said detecting means comprise a camera suitable for capturing the image of the article to be stored. Said camera is operatively connected to image processing means suitable for detecting the characteristic dimensions of the article, for example height, width, thickness and volume.

According to a further variation of embodiment, said detecting means comprise optical devices, for example laser, cooperating with each other for detecting the dimensions of the article.

According to an even further variation said detecting means comprise means suitable for detecting the humidity of the air.

Moreover, said apparatus comprises parameter processing means 16, suitable for cooperating with said detecting means for acquiring said physical parameters and processing them for detecting, based thereon, a loading unit and a position in said unit for storing the article.

In other words, said physical parameters are acquired by said parameter processing means and processed, according to an algorithm, in order to detect a loading unit and a predetermined position in said loading unit wherein the article is to be stored.

Said algorithm is for example capable of detecting a loading unit and a position therein in order to minimise the volume occupied by the articles.

Said algorithm is for example capable of detecting a loading unit and/or a position therein in order to store the articles more frequently picked up in the loading units closer to the use station when seated in the storing means.

Said algorithm is for example capable of detecting a loading unit and/or a position therein in order to store the heavier articles in the loading units arranged at lower heights, in order to facilitate the operation of said archiving means.

According to a further embodiment, said apparatus comprises recognition means 18 suitable for acquiring recognition information for uniquely recognising a book.

Said recognition means are arranged in the proximity of the use station and accessible to the user also in the configuration wherein said closing means prevent access to the seating zone.

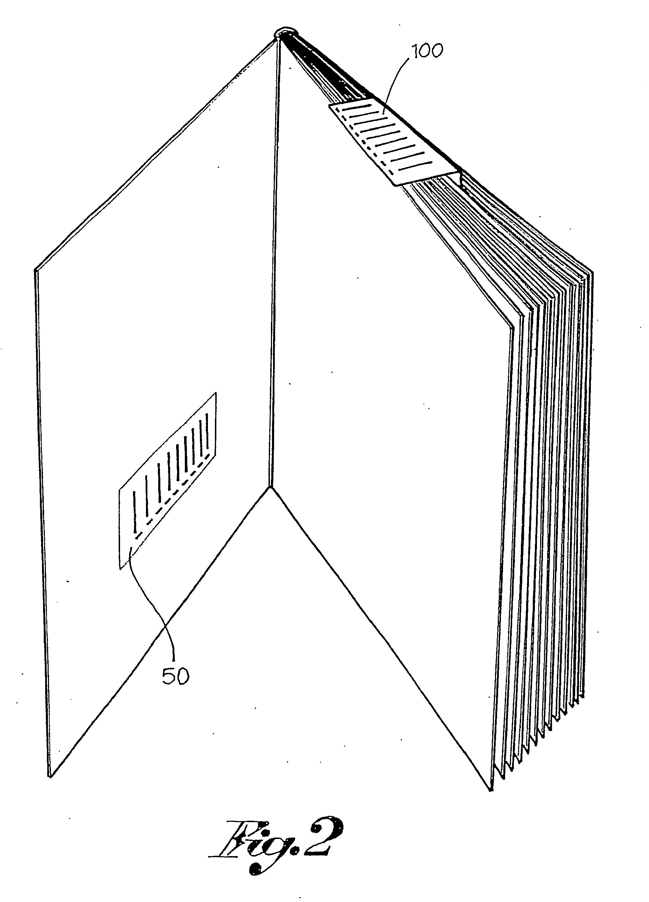

In a variation of embodiment, said recognition information is associated and derives from a bar code or a numerical or alphanumerical code associable to the article, for example contained on a label 50 stuck on the cover or into the cover of the book (figure 2).

Preferably, said recognition means comprise output signal transmitter means, for example of magnetic type, for example radio waves, or electrical type, and input signal receiver means, wherein said input signals are sent by a label associated to a book containing a circuit energisable by said output signals for sending said input signals.

In other words, said recognition means comprise a radiofrequency recognition system (RFID).

Preferably, said transmitter means and said receiver means are integrated in the bottom of the tray wherein the books are contained.

According to a further embodiment, said apparatus comprises reproduction means 20 suitable for generating said recognition information on said label.

For example, said reproduction means comprise a printing device, preferably arranged at the use station, suitable for printing a label 100 containing the barcode or the alphanumerical code identifying the book (figure 2).

According to a further embodiment, said apparatus comprises location means 22 suitable for acquiring content information based on which to determine which and how many books have been picked up or are positioned into a loading unit.

Preferably, said location means comprise at least a camera and a handling device suitable for handling said camera for inspecting the interior of the loading unit.

According to a further preferred embodiment, also said location means comprise a radiofrequency recognition system (RFID), preferably integrated in the tray.

According to a preferred embodiment, said apparatus comprises signalling means 24 suitable for emitting a signal, for example a light signal such as a low-power laser beam, suitable for determining the position, within a loading unit, wherein the article to be stored has to be stored.

Said apparatus could be seated into one or more rooms used as library or archive.

In a further embodiment, said apparatus comprises an enclosure suitable for seating the component parts thereof.

According to a preferred embodiment, said enclosure is suitable for keeping the articles contained therein visible; for example, said enclosure is made of glass.

Moreover, said apparatus comprises management means 30 operatively connected to said acquisition means, to said transcription means, to said option display means, to said closing means, to said archiving means, to said detecting means, to said parameter processing means, to said recognition means, to said reproduction means, to said identification means and to said signalling means.

Said management means preferably comprise a microprocessor or an electronic processor.

Moreover, said apparatus comprises storing means, for example magnetic, suitable for storing the information sent. Said storing means are operatively connected to said management means.

In the normal use, the apparatus according to the present invention is suitable for allowing the pick up of an article, for example a book, by a user.

In a first step, called acquisition step, the user inserts the recognition card into the acquisition means.

The acquisition means acquire the identification information present on the card. Said information is sent to the management means for processing. If the identified user is not authorised to pick up books, the card is returned and the display means display an unauthorised pick up message. If the user is authorised to pick up, it is possible to access an article selection step.

In the article selection step, the option display means display the available options to the user to select the book: selection by title, author, year of publication, publisher, topic, based on the availability, and so on.

Through selection means, for example a keyboard or a touch-screen, the user finds an article to pick up. The information that characterises the article to be picked up, defined as request information, is transmitted to the management means.

In a procurement step, the management means processes the request information, associates said request information to location coordinates, which locate the loading unit containing the article, and position coordinates, which locate the position of the article in said loading unit.

Moreover, the management means send control signals to the archiving means, such as to control the movement of said archiving means, the pick up of the loading unit determined by said location coordinates and the carriage of said loading unit to the use station.

In particular, said archiving means position said loading unit into said seating zone of the use station.

In a pick up authorisation step, the management means send a control signal to said closing means so that said closing means switch from an unauthorised pick up configuration to an authorised pick up configuration wherein the user can access the seating zone.

For example, following said control signal, said port raises and allows the user to access the seating zone, wherein the loading unit is already positioned.

Afterwards, an article signalling step is carried out.

During said signalling step, said management means send a control signal to said signalling means that signal the position wherein the article to be picked up is positioned in the loading unit, based on said positioning coordinates.

For example, said signalling means emit a light beam, for example a laser beam, suitable for indicating the article to be picked up.

The article is thus found and easily picked up.

Afterwards, a pick up check step is carried out.

During said pick up check step, the location means inspect the contents of the loading unit located in the seating zone, acquire the recognition information of the books contained therein and as a consequence, determine the book picked up, determined by a pick up information.

In a preferred embodiment, said pick up check step is carried out by said RFID system.

Said pick up information is transmitted to the management means.

Said management means process said pick up information and compare it to said request information. If the pick up information relating to the book actually picked up does not match the request information, relating to the book requested by the user, the management means send an error signal to the display means which transmit a signalling message relating to the incorrect pick up of a book to the user.

If the pick up information matches the request information, the management means transmits a control signal to the transcription means for transcribing said pick up information on said user information media.

Moreover, said management means transmits a control signal to the closing means for switching from an authorised pick up configuration to an unauthorised pick up configuration.

Finally, the information media is returned to the user.

Such an apparatus is suitable for storing an article picked up beforehand.

After the identification step, as described above, an article recognition step is carried out.

During said step, the recognition means cooperate with the article for the recognition thereof. For example, the label containing the book recognition code is moved close to a barcode reader of said recognition means.

According to a variation of embodiment, said recognition step is carried out through said RFID system.

The recognition information is transmitted to the management means.

Afterwards, a check step is carried out.

The book cooperates with said detecting means for acquiring the typical physical parameters of the article.

For example, the article is laid on a detection plane and subject to the action of said detecting means that acquire dimensions and weight of the article.

The physical parameters are transmitted to the management means. Said management means associate the detected recognition information to the reference physical parameters stored for the book corresponding to said recognition information.

The management means compare the physical parameters detected with the reference physical parameters.

If the physical parameters detected do not match the reference physical parameters, the management means send a control signal to the display means for the transmission of a wrong identification of the book or tampering thereof to the user.

If the reference physical parameters match the physical parameters detected, said physical parameters are transmitted to the parameter processing means which, according to a predetermined algorithm, generate optimum location and position coordinates for the article, that is, generate coordinates that determine an optimum loading unit and an optimum position in said loading unit for the subject book.

Said location and positioning coordinates are transmitted to the management means that send a control signal to the archiving means for picking up the loading unit determined, carrying and positioning it in the seating zone.

Once the designated loading unit has been positioned in the seating zone of the use station, the management means send a control signal to the closing means for switching from a disabled configuration to an enabled configuration suitable for allowing access to the seating zone and thus to the designated loading unit seated therein.

Moreover, the reproduction means acquire the book detection information and print a new label containing such codes. Such label is suitable for being coupled to the article, for example for being inserted between the pages of the book or coupled therewith through a repositionable adhesive support.

The management means transmit the positioning coordinates to the signalling means. The signalling means signal, for example through a light pointer or through a representation on a screen, the position in which the book is to be positioned in the loading unit.

Once the book has been positioned in the loading unit, said location means acquire the position of the book into the loading unit and transmit such acquired position coordinates to the processing means.

If the processing means detect that the acquired position coordinates differ from the position coordinates designated for the storage, they send control signals to the display means for transmitting error and correction messages to the user.

If the acquired position coordinates match the position coordinates designated for the storage, the closing means disable access to the seating zone, for example the port lowers, and the loading unit is archived through said archiving means.

The transcription means transcribe the storage information on the recognition card and the card is returned to the user.

Moreover, said transcription means send said storage information to said storing means for storage thereof.

Innovatively, the apparatus according to the present invention allows reducing the space occupied for book archiving, since before storage, and during the first archiving of the books, a detection of the interesting physical parameters is carried out for each book, through said detecting means, for example dimensions, weight, volume, and based on an algorithm, the optimum loading unit and position therein are determined for minimising the volume occupied by the books.

According to a further advantageous aspect, the apparatus described above allows managing an archive containing a high number of books, files, dossiers through a reduced number of staff, since it allows carrying out control activities of pick ups and storages.

In particular, advantageously, the apparatus described above allows checking that the pick up from the tray carried out by the user matches the request made as well as checking that the storage in the tray relates to the identified book.

Moreover, the apparatus allows access for pick up to authorised users only or, based on the information stored on the card, limiting the possibilities of pick up for some users to some books only.

For example, it is possible to allow pick up of some precious books, for example old or valuable books, only to some authorised users, such as students or the like.

According to a further advantageous aspect, the apparatus according to the present invention allows easily applying a rate for borrowing the books, for example variable according to the books or the days of delay in returning a book picked up.

Advantageously, moreover, the apparatus described above allows access to disabled persons.

It is clear that a man skilled in the art can make several changes and adjustments to the apparatus described above in order to meet specific and incidental needs, all falling within the scope of protection defined in the following claims.

## Claims

1. An apparatus for storing and picking up articles, for example books, suitable for allowing a user to store and then pick up articles having different physical parameters, such as dimensions and weight, comprising:
- a use station suitable for cooperating with the user for storing and then picking up the article;
- a plurality of loading units, each of said loading units being suitable for seating at least one of said articles in a predetermined position;
- support means suitable for seating said plurality of loading units;
- archiving means (12) of the loading units suitable for cooperating with said support means for seating said loading units therein, picking up said loading units from said storing means and carrying them to said use station for the delivery to the user;
wherein said apparatus further comprises detecting means (14) suitable for detecting said dimensions and/or said weight of said article and management means (30), suitable for cooperating with said detecting means for acquiring said physical parameters and for processing them for determining, based thereon, a loading unit and a position in said unit for storing the article,
**characterized in that** said archiving means (12) comprise a self-propelled carriage comprising a collecting zone suitable for seating at least a further loading unit in addition to the carried loading unit for archiving said loading units according to logic of optimization of the routes covered by said carriage.

2. An apparatus according to claim 1, further comprising signalling means (24), e.g. a light pointer, operatively connected to said management means (30), suitable for signalling a particular position of an article in the loading unit to the user based on position coordinates associated to said article.

3. An apparatus according to any one of the previous claims, further comprising location means, operatively connected to said management means, suitable for inspecting said loading unit for detecting the contents of said loading unit.

4. An apparatus according to claim 3, wherein said location means comprise a camera and a handling device associated to said camera.

5. An apparatus according to claim 3, wherein said location means comprise a radiofrequency identification system (RFID).

6. An apparatus according to any one of the previous claims, further comprising recognition means (18), operatively connected to said management means, suitable for cooperating with said articles for acquiring recognition information from a label associated to said article.

7. An apparatus According to claim 6, wherein said recognition means comprise a barcode reader or an RFID system.

8. An apparatus according to claim 7, wherein said RFID system is integrated in said loading unit.

9. An apparatus according to any one of claims 6 to 8, further comprising reproduction means (20) suitable for reproducing said recognition information on a label (100) .

10. An apparatus according to claim 9, wherein said reproduction means comprise a printing device.

11. An apparatus according to any one of the previous claims, further comprising closing means (10), operatively connected to said management means (30), suitable for preventing and/or allowing the user's access to a loading unit arranged in a seating zone of said use station.

12. An apparatus according to claim 11, wherein said closing means comprise a rising and/or lowering port.

13. An apparatus according to any one of the previous claims, wherein said loading unit is inclinable and suitable for allowing access to disabled persons.

14. An apparatus according to any one of the previous claims, comprising information management means and storing means.

15. An apparatus according to any one of the previous claims, comprising an outer enclosure suitable for seating the components of said apparatus.

16. An apparatus according to claim 15, wherein said enclosure is transparent.

## Patentansprüche

1. Vorrichtung zum Lagern und Aufnehmen von Gegenständen, zum Beispiel Büchern, die geeignet ist, einem Benutzer zu erlauben, Gegenstände mit verschiedenen physischen Parametern, wie etwa Abmessungen und Gewicht, zu lagern und dann aufzunehmen, die umfasst:
- eine Verwendungsstation, die geeignet ist, mit dem Benutzer zum Lagern und dann Aufnehmen des Artikels zu kooperieren;
- eine Vielzahl von Ladeeinheiten, wobei jede der Ladeeinheiten geeignet ist, um wenigstens einen der Gegenstände in einer vorgegebenen Position aufzusetzen;
- Haltemittel, die geeignet sind, um die Vielzahl von Ladeeinheiten aufzusetzen;
- Archivierungsmittel (12) der Ladeeinheiten, die geeignet sind, um mit den Haltemitteln zu kooperieren, um die Ladeeinheiten darin aufzusetzen, die Ladeeinheiten aus den Speichermitteln aufzunehmen und sie für die Lieferung an den Benutzer zu der Verwendungsstation zu befördern;
wobei die Vorrichtung ferner Erfassungsmittel (14), die geeignet sind, um die Abmessungen und/oder das Gewicht des Gegenstands zu erfassen, und Verwaltungsmittel (30) umfasst, die geeignet sind, mit den Erfassungsmitteln zu kooperieren, um die physischen Parameter an sich zu bringen und sie zu verarbeiten, um basierend darauf eine Ladeeinheit und eine Position in der Einheit zum Lagern des Gegenstands zu bestimmen,
**dadurch gekennzeichnet, dass** die Archivierungsmittel (12) einen selbstangetriebenen Wagen umfassen, der eine Sammelzone umfasst, die geeignet ist, um neben der beförderten Ladeeinheit wenigstens eine weitere Ladeeinheit aufzusetzen, um die Ladeeinheiten entsprechend der Optimierungslogik der von dem Wagen abgedeckten Route zu archivieren.

2. Vorrichtung nach Anspruch 1, die ferner Signalisierungsmittel (24), z.B. Lichtzeiger, umfasst, die betriebsfähig mit den Verwaltungsmitteln (30) verbunden sind, die fähig sind, eine bestimmte Position eines Gegenstands in der Ladeeinheit basierend auf zu dem Gegenstand gehörenden Positionskoordinaten an den Benutzer zu signalisieren.

3. Vorrichtung nach einem der vorhergehenden Ansprüche, die ferner Positionierungsmittel umfasst, die betriebsfähig mit den Verwaltungsmitteln verbunden sind, die geeignet sind, die Ladeeinheit zu überprüfen, um die Inhalte der Ladeeinheit zu erfassen.

4. Vorrichtung nach Anspruch 3, wobei die Positionsbestimmungsmittel eine Kamera und eine mit der Kamera verbundene Handhabungsvorrichtung umfassen.

5. Vorrichtung nach Anspruch 3, wobei die Positionsbestimmungsmittel ein Funkfrequenz-Identifikationssystem (RFID) umfassen.

6. Vorrichtung nach einem der vorhergehenden Ansprüche, die ferner Erkennungsmittel (18) umfasst, die betriebsfähig mit den Verwaltungsmitteln verbunden sind, die geeignet sind, um mit den Gegenständen zu kooperieren, um von einem zu dem Gegenstand gehörenden Etikett Erkennungsinformationen zu erfassen.

7. Vorrichtung nach Anspruch 6, wobei die Erkennungsmittel einen Barcodeleser oder ein RFID-System umfassen.

8. Vorrichtung nach Anspruch 7, wobei das RFID-System in die Ladeeinheit integriert ist.

9. Vorrichtung nach einem der Ansprüche 6 bis 8, die ferner Reproduktionsmittel (20) umfasst, die geeignet sind, um die Erkennungsinformationen auf einem Etikett (100) zu reproduzieren.

10. Vorrichtung nach Anspruch 9, wobei die Reproduktionsmittel eine Druckvorrichtung umfassen.

11. Vorrichtung nach einem der vorhergehenden Ansprüche, die ferner Schließeinrichtungen (10) umfasst, die betriebsfähig mit den Verwaltungsmitteln (30) verbunden sind, die geeignet sind, den Zugriff des Benutzers auf eine Ladeeinheit, die in einer Aufsetzzone der Verwendungsstation angeordnet ist, zu verhindern und/oder zuzulassen.

12. Vorrichtung nach Anspruch 11, wobei die Schließmittel eine ansteigende und/oder abfallende Öffnung umfassen.

13. Vorrichtung nach einem der vorhergehenden Ansprüche, wobei die Ladeeinheit neigbar ist und geeignet ist, den Zugriff für behinderte Personen zuzulassen.

14. Vorrichtung nach einem der vorhergehenden Ansprüche, die Informationsverwaltungsmittel und Lagermittel umfasst.

15. Vorrichtung nach einem der vorhergehenden Ansprüche, die ein äußeres Gehäuse umfasst, das zum Aufsetzen der Komponenten der Vorrichtung geeignet ist.

16. Vorrichtung nach Anspruch 15, wobei das Gehäuse transparent ist.

## Revendications

1. Appareil pour stocker et prendre des articles, par exemple des livres, approprié pour permettre à un utilisateur de stocker et de prendre ensuite des articles ayant des paramètres physiques différents, tels que les dimensions et le poids, comprenant:
- une station d'utilisation appropriée pour coopérer avec l'utilisateur afin de stocker et de prendre ensuite l'article;
- une pluralité d'unités de chargement, chacune desdites unités de chargement étant appropriée pour installer au moins l'un desdits articles dans une position prédéterminée;
- des moyens de support appropriés pour installer ladite pluralité d'unités de chargement;
- des moyens d'archivage (12) des unités de chargement appropriés pour coopérer avec lesdits moyens de support pour installer lesdites unités de chargement à l'intérieur de ces derniers, prendre lesdites unités de chargement desdits moyens de stockage et les transporter vers ladite station d'utilisation pour la distribution à l'utilisateur;
dans lequel ledit appareil comprend en outre des moyens de détection (14) appropriés pour détecter lesdites dimensions et/ou ledit poids dudit article et des moyens de gestion (30) appropriés pour coopérer avec lesdits moyens de détection pour acquérir lesdits paramètres physiques et pour les traiter afin de déterminer, en fonction de ces derniers, une unité de chargement et une position dans ladite unité pour stocker l'article, **caractérisé en ce que** lesdits moyens d'archivage (12) comprennent un chariot autopropulsé comprenant une zone de collecte appropriée pour installer au moins une autre unité de chargement en plus de l'unité de chargement transportée pour archiver lesdites unités de chargement selon la logique d'optimisation des voies couvertes par ledit chariot.

2. Appareil selon la revendication 1, comprenant en outre des moyens de signalisation (24), par exemple un crayon optique, raccordés de manière opérationnelle auxdits moyens de gestion (30), appropriés pour signaler une position particulière d'un article dans l'unité de chargement à l'utilisateur en fonction des coordonnées de position associées audit article.

3. Appareil selon l'une quelconque des revendications précédentes, comprenant en outre des moyens de positionnement, raccordés de manière opérationnelle auxdits moyens de gestion, appropriés pour inspecter ladite unité de chargement afin de détecter le contenu de ladite unité de chargement.

4. Appareil selon la revendication 3, dans lequel lesdits moyens de positionnement comprennent une caméra et un dispositif de manipulation associé à ladite caméra.

5. Appareil selon la revendication 3, dans lequel lesdits moyens de positionnement comprennent un système d'identification par radiofréquence (RFID).

6. Appareil selon l'une quelconque des revendications précédentes, comprenant en outre des moyens de reconnaissance (18), raccordés de manière opérationnelle auxdits moyens de gestion, appropriés pour coopérer avec lesdits articles afin d'acquérir l'information de reconnaissance à partir d'une étiquette associée audit article.

7. Appareil selon la revendication 6, dans lequel lesdits moyens de reconnaissance comprennent un lecteur de code à barres ou un système RFID.

8. Appareil selon la revendication 7, dans lequel ledit système RFID est intégré dans ladite unité de chargement.

9. Appareil selon l'une quelconque des revendications 6 à 8, comprenant en outre des moyens de reproduction (20) appropriés pour reproduire ladite information de reconnaissance sur une étiquette (100).

10. Appareil selon la revendication 9, dans lequel lesdits moyens de reproduction comprennent un dispositif d'impression.

11. Appareil selon l'une quelconque des revendications précédentes, comprenant en outre des moyens de fermeture (10), raccordés de manière opérationnelle auxdits moyens de gestion (30), appropriés pour empêcher et/ou autoriser l'accès de l'utilisateur à une unité de chargement agencée dans une zone d'installation de ladite station d'utilisation.

12. Appareil selon la revendication 11, dans lequel lesdits moyens de fermeture comprennent un orifice de levage et/ou d'abaissement.

13. Appareil selon l'une quelconque des revendications précédentes, dans lequel ladite unité de chargement peut s'incliner et est appropriée pour permettre l'accès aux personnes handicapées.

14. Appareil selon l'une quelconque des revendications précédentes, comprenant des moyens de gestion d'information et des moyens de stockage.

15. Appareil selon l'une quelconque des revendications précédentes, comprenant une enceinte externe appropriée pour installer les composants dudit appareil.

16. Appareil selon la revendication 15, dans lequel ladite enceinte est transparente.
